# EUROPÄISCHE PATENTSCHRIFT

(11) **EP 1 931 935 B1**
(45) Veröffentlichungstag und Bekanntmachung des Hinweises auf die Patenterteilung: **26.11.2008**
(21) Anmeldenummer: 06805288.5
(22) Anmeldetag: 13.09.2006
(51) Int. Cl.: G01B 3/30

(54) **KALIBRIERLEHRE ZUR KALIBRIERUNG EINES MESSSCHIEBERS**
CALIBRATING GAUGE FOR CALIBRATING A VERNIER CALIPER
CALIBRE ETALON POUR L'ETALONNAGE D'UN CALIBRE A COULISSE

(30) Priorität: 15.09.2005 DE 202005014635 U
(43) Veröffentlichungstag der Anmeldung: 18.06.2008
(73) Patentinhaber: Jeromin, Johannes, 86720 Nördlingen (DE)
(72) Erfinder: Jeromin, Johannes, 86720 Nördlingen (DE)
(74) Vertreter: Cremer, Ulrike Theresia
(86) Internationale Anmeldenummer: PCT/DE2006/001626
(87) Internationale Veröffentlichungsnummer: WO 2007/031070

(56) Entgegenhaltungen:
- EP-A2- 0 703 430
- WO-A-94/21982
- US-A- 3 908 278
- US-A- 5 134 781
- US-A- 6 092 411

## Beschreibung

Die vorliegende Erfindung betrifft eine Kalibrierlehre zur Kalibrierung eines Messschiebers.

Messschieber, die früher auch Schieblehre oder Schiebelehre genannt worden sind, sind Längenmessgeräte. Für die Messung von Außen- und Innenmaßen besitzt der Messschieber jeweils zwei Messflächen. Außerdem verfügen Messschieber gewöhnlich über eine weitere Messfläche zur Tiefenmessung. Zur Steigerung der Ablesegenauigkeit sind auf einem Messschieber häufig ein Nonius oder eine Uhr vorgesehen. Moderne Messschieber kennen auch elektronische Anzeigen. Bei sämtlichen Messschiebern ergeben sich im Laufe der Zeit Messungenauigkeiten, z. B. durch Beschädigung, Verschmutzung oder Nachgeben der Führungen. Um solche Messfehler auszuschließen, werden Messschieber mit Hilfe von Lehren kalibriert. Um eine hohe Messgenauigkeit zu gewährleisten, sollten Messschieber vor jeder Messung mit einer Lehre überprüft und gegebenenfalls nachgestellt werden.

Bekannt sind für die Kalibrierung von Messschiebern Endmaße. Dabei handelt es sich um kleine Blöcke, die eine bestimmte Länge mit einer hohen Genauigkeit verkörpern. Endmaße sind folglich geeignet für die Kalibrierung der Außenmessfunktion eines Messschiebers. Für die Kalibrierung der Innenmessfunktion sind Ringe bekannt, die einen definierten Innendurchmesser mit einer hohen Genauigkeit haben. Für die Kalibrierung der Tiefenmessfunktion gibt es wiederum entsprechende Tiefenkalibrierlehren. Gewöhnlich werden die Maße bei Kalibrierlehren auf mindestens zwei, häufig sogar auf drei Nachkommastellen genau angegeben. Diese bekannten Kalibrierlehren haben aber den Nachteil, dass für jede Messfunktion jeweils eine gesonderte Kalibrierlehre verwendet werden muss. In der Praxis wird eine Kalibrierung von Messschiebern kaum vorgenommen, da es als unpraktisch empfunden wird, stets einen Satz an Kalibrierlehren im Bereich der Werkbank zu haben bzw. mit sich zu führen.

Aus der US 2003/0106229 A1 ist eine Referenzlehre zum Kalibrieren von Messmaschinen bekannt. Bei solchen Messmaschinen handelt es sich um Messroboter mit einer Sondenspitze. Bei der vorgestellten Kalibriervorrichtung handelt es sich um eine Säule, die eine Höhenmesskalibrierung erlaubt. Vorgesehen ist, dass zusätzlich zu der Referenzierung in vertikaler Richtung eine Referenzierung in horizontaler Richtung vorgesehen ist. Folglich erlaubt die dort beschriebene Vorrichtung eine Kalibrierung von zwei verschiedenen Dimensionen, Höhe und Breite, mit einer einzigen Referenzlehre.

Die DE 694 08 305 T2 beschreibt ein Mess- und Kalibrierwerkzeug, das eine Anzahl von Bezugsoberflächenvorsprüngen aufweist. Diese bilden auf Grund ihrer Anordnung zueinander eine Anzahl von Mess- oder Kalibrierabständen, die zum Kontrollieren oder Messen von Vorrichtungen sowohl für die Innen- als auch für die Außenmessung geeignet sein sollen. Die Kalibriervorrichtung ist in einem gesonderten Ständer gehaltert. Sie ist vergleichsweise groß und aus diesem Grund schlecht mitzuführen. Zudem ist damit lediglich die Kalibrierung der Innen- und Außenmesseinrichtung eines Messschiebers möglich.

Die europäische Patentanmeldung EP 0703430 A2 offenbart ein Verfahren zur Kalibrierung eines Koordinatenmessgeräts. Hierfür wird ein Kalibrierkörper mit bestimmten Konturen und geometrischen Elementen bereitgestellt. Einer der offenbarten geometrischen Grundkörper ist ein Hohlzylinder mit bekannten Innen- und Außendurchmessern, wodurch Messwerte für bestimmte Drehwinkel erzeugt werden.

Aufgabe der vorliegenden Erfindung ist daher, eine Kalibrierlehre bereitzustellen, mit der sämtliche Funktionen eines Messschiebers kalibriert werden können und die einfach zu handhaben und mitzuführen ist.

Diese Aufgabe wird gelöst durch eine Kalibrierlehre nach Anspruch 1. Vorteilhafte Ausgestaltungen sind Gegenstand der abhängigen Ansprüche.

Die erfindungsgemäße Kalibrierlehre ist zur Kalibrierung eines Messschiebers geeignet. Die entsprechenden Kalibrierfunktionen können jedoch ebenfalls zur Kalibrierung von anderen Messgeräten verwendet werden, beispielsweise zur Kalibrierung eines Mikrometers. Die Kalibrierlehre kann hierfür entsprechend in ihren Dimensionen angepasst werden.
Erfindungsgemäß sind zumindest drei Kalibrierflächen vorgesehen. Die Kalibrierlehre weist zumindest eine Kalibrierfläche zur Kalibrierung einer Messfläche für die Innenmessung, zumindest eine Kalibrierfläche zur Kalibrierung einer Messfläche für die Außenmessung und zumindest eine Kalibrierfläche zur Kalibrierung einer Messfläche für die Tiefenmessung auf. Die Kalibrierlehre ist hierfür in der Art eines zumindest teilweise hohlen Zylinders gestaltet. Zumindest ein Teil der Innenfläche im Hohlbereich des Zylinders ist als Kalibrierfläche für die Innenmessfläche des Messschiebers ausgearbeitet. Zumindest ein Bereich der Mantelfläche des Zylinders ist als Kalibrierfläche für die Außenmessfläche der Kalibrierlehre gearbeitet. Schließlich ist an zumindest einer der Stirnseiten des Zylinders eine Kalibrierfläche für die Tiefenmessfläche vorgesehen. Hierfür ist eine Vertiefung in der Stirnfläche aufgearbeitet Die Oberflächen der jeweiligen Kalibrierflächen sind hochgenau bearbeitet, so dass eine Längenangabe im Bereich von zumindest zwei, insbesondere von drei Nachkommastellen gemacht werden kann.

Vorteilhaft ist folglich, dass die Kalibrierlehre in einer einzigen Vorrichtung sämtliche Kalibrierfunktionen zur Kalibrierung aller drei Messfunktionen eines Messschiebers vereinigt. Trotz dieser Mehrfachfunktion ist die Kalibrierlehre insgesamt so kompakt gebaut, dass sie im Bereich der Werkbank aufbewahrt werden kann. Bevorzugt werden solche Dimensionen gewählt, dass die Kalibrierlehre in der Hosentasche einer Arbeitshose, wie sie gewöhnlich von Mechanikern bei ihrer Arbeit getragen wird, Platz findet.

Nachfolgend wird die Erfindung anhand der Zeichnungen näher erläutert und beschrieben.

Es zeigen:
- Fig. 1:: einen Schnitt durch die erfindungsgemäße Kalibrierlehre entlang der Linie A-A in Fig. 2;
- Fig. 2:: eine Aufsicht auf die Kalibrierlehre der Fig. 1, bei welcher tiefer liegende Strukturen eingetragen sind;
- Fig. 3:: eine Aufsicht auf die Kalibrierlehre der Fig. 1;
- Fig. 4:: eine Seitenansicht einer erfindungsgemäßen Kalibrierlehre;
- Fig. 5:: ein zweites Ausführungsbeispiel einer erfindungsgemäßen Kalibrierlehre im Schnitt (A), in Aufsicht (B) und in Unteransicht (C); und
- Fig. 6:: noch ein weiteres Ausführungsbeispiel einer erfindungsgemäßen Kalibrierlehre im Schnitt (A), in Aufsicht (B) und in Unteransicht (C).

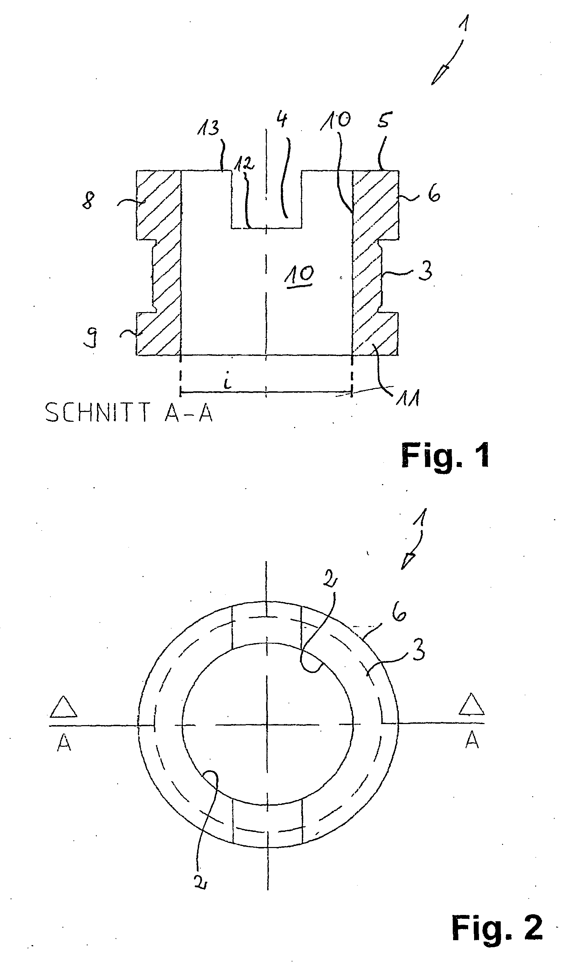

Die Fig. 1 bis 4 zeigen ein erstes Ausführungsbeispiel einer erfindungsgemäßen Kalibrierlehre. Die Kalibrierlehre 1 hat insgesamt eine zylindrische Form. In der Ausführung der Fig. 1 bis 4 handelt es sich um einen Hohlzylinder. Die Kalibrierlehre 1 weist eine Kalibrierfläche zur Kalibrierung einer Messfläche für die Innenmessung 2 auf. Im Folgenden wird diese Kalibrierfläche auch kurz als Innenmesskalibrierfläche 2 bezeichnet. Weiter weist die Kalibrierlehre 1 eine Kalibrierfläche zur Kalibrierung einer Messfläche für die Außenmessung 3, im Folgenden auch kurz als Außenmesskalibrierfläche 3 bezeichnet, auf. Schließlich ist eine Kalibrierfläche zur Kalibrierung einer Messfläche für die Tiefenmessung 4, kurz Tiefenmesskalibrierfläche 4, vorgesehen.

Die Kalibrierung der Messfläche für die Außenmessung eines Messschiebers erfolgt dabei durch Umfassen der Außenmesskalibrierfläche 3, so dass der Außendurchmesser a gemessen wird. Der exakte Wert von a und damit der Außenmesskalibrierfläche 3 ist auf der Kalibrierlehre 1 angegeben. Die Außenmesskalibrierfläche 3 ist im Ausführungsbeispiel der Fig. 1 bis 4 vertieft in die Mantelfläche 6 des Zylinders eingearbeitet, dies bedeutet, dass der Durchmesser a kleiner ist als der Außendurchmesser A des Zylinders. Dies ist besonders vorteilhaft, da durch diese Maßnahme das parallele Anlegen der Messflächen für die Außenmessung eines Messschiebers erleichtert wird. Messungenauigkeiten werden so reduziert. Bevorzugt ist die Höhe h dieser vertieften Außenmesskalibrierfläche 3 so bemaßt, dass die Kalibrierlehre 1 auch zur Kalibrierung eines Mikrometers verwendbar ist. Ein übliches Maß, das für die Kalibrierung von Mikrometern geeignet ist, ist eine Höhe h von mindestens 9 mm.

Die Innenmesskalibrierfläche 2 wird durch die Innenfläche 10 des Hohlzylinders der Kalibrierlehre 1 gebildet. Gemessen wird dabei der Innendurchmesser i der Kalibrierlehre 1. Der exakte Wert für i ist als Beschriftung 7 auf der Kalibrierlehre 1 angegeben, beispielsweise auf der Stirnseite 5 der Kalibrierlehre.

In die Stirnseiten 5 des Zylinders sind überdies die Tiefenmesskalibrierflächen 4 eingearbeitet. Es ist vorgesehen, dass wenigstens eine Tiefenmesskalibrierfläche 4 auf einer erfindungsgemäßen Kalibrierlehre 1 vorgesehen ist. Bevorzugt sind jedoch mehrere Tiefenmesskalibrierlehren 4 vorgesehen. Im Ausführungsbeispiel der Fig. 1 bis 4 sind zwei Tiefenmesskalibrierflächen 4 und 4' vorgesehen. Die Tiefenmesskalibrierflächen 4 und 4' liegen dabei bevorzugt einander fluchtend gegenüber. Bei der Tiefenmesskalibrierfläche 4 handelt es sich um einen Einschnitt in die Wandung 11 des Zylinders der Kalibrierlehre 1. Die Tiefe t des Einschnittes definiert dabei das Maß, mit dem die Tiefenmesskalibrierung vorgenommen wird. Der Wert für t ist wiederum auf der Kalibrierlehre 1 angegeben, im Ausführungsbeispiel der Fig. 1 bis 4 auf der Stirnseite 5 als Beschriftung 7'.

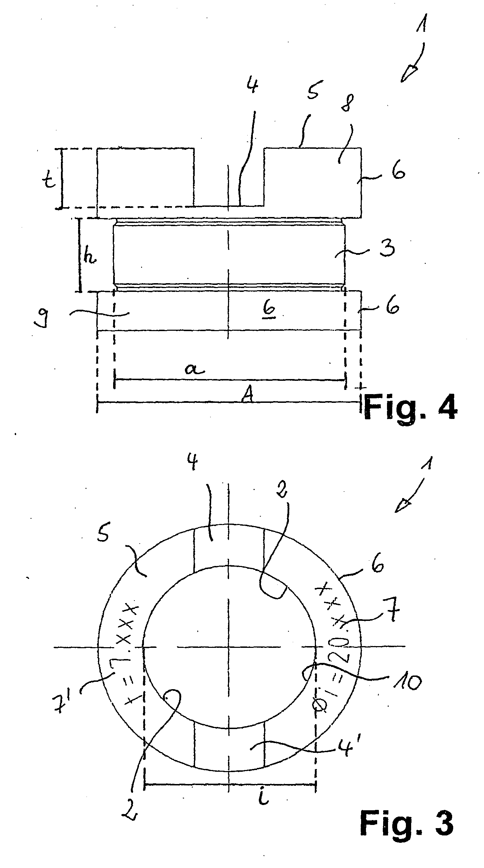

Aus den Fig. 1 und 4 wird ersichtlich, dass die Innenfläche 10 des Zylinders so gestaltet ist, dass der Innendurchmesser des Hohlzylinders i über die gesamte Höhe der Kalibrierlehre 1 gleich bleibend ist. Ferner ist in den Fig. 1 und 4 ersichtlich, dass die Außenmesskalibrierfläche 3 von zwei diese Fläche begrenzenden Ringen, die zueinander parallel liegen, begrenzt ist. Die Begrenzungsringe 8 und 9 können dabei sowohl unterschiedliche Höhen als auch annähernd gleiche Höhen aufweisen. Im Ausführungsbeispiel der Fig. 1 bis 4 ist die Höhe des Begrenzungsringes 8 größer als die Höhe des Begrenzungsringes 9. Bevorzugt ist in der Wandung 11 im Bereich des Begrenzungsringes 8 die Tiefenmesskalibrierfläche 4 ausgebildet, wobei diese sich nahezu über die gesamte Höhe des Begrenzungsringes 8 erstreckt. Die dort vorgefundene, im Vergleich zu dem Bereich der Außenmesskalibrierfläche 3 dickere Wandung 11 bietet somit den Vorteil, dass die Tiefenmesskalibrierfläche 4 eine entsprechend breitere Aufsetzfläche 12 auf dem Grund der Tiefenmesskalibrierfläche und eine entsprechend breite Aufsetzfläche 13 auf der Stirnseite 5 zum Aufsetzen des Messschiebers bei der Kalibrierung aufweist.

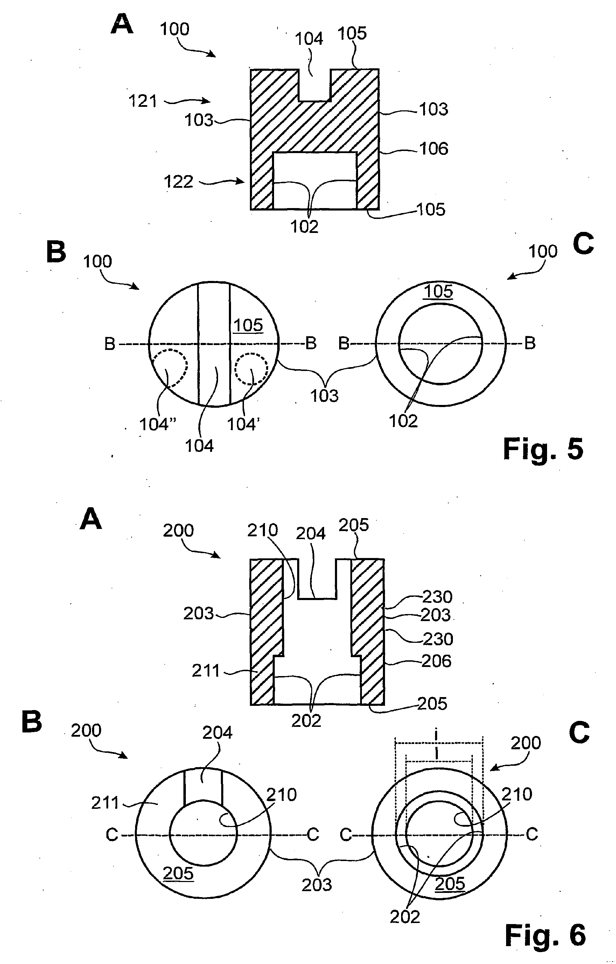

Fig. 5 zeigt ein weiteres Ausführungsbeispiel einer Kalibrierlehre 100. Die Fig. 5A zeigt dabei einen Schnitt entlang der Linie B-B in den Fig. 5B bzw. 5C. Die Kalibrierlehre 100 weist wiederum drei Kalibrierflächen auf, nämlich die Kalibrierfläche zur Kalibrierung einer Messfläche für die Innenmessung 102, die Kalibrierfläche für die Kalibrierung einer Messfläche für die Außenmessung 103 und eine Kalibrierfläche zur Kalibrierung einer Messfläche für die Tiefenmessung 104. Die Außenmesskalibrierfläche 103 erstreckt sich dabei über die gesamte Mantelfläche 106 der Kalibrierlehre 100.

Im Gegensatz zur Ausführung der Fig. 1 bis 4 ist die Kalibrierlehre 100 teilmassiv ausgebildet. Dies bedeutet, dass ein massiver Bereich 121 vorgesehen ist und ein hohler Bereich 122. Im hohlen Bereich 122 ist die Innenmesskalibrierfläche 102 ausgebildet. Für die Kalibrierung wird folglich mit der Messfläche für die Innenmessung eines Messschiebers in den hohlen Bereich 122 eingegriffen und der Innendurchmesser dieses Bereichs wird gemessen. Die Außenmesskalibrierfläche 103 ist auf der gesamten Mantelfläche 106 der Kalibrierlehre 100 vorgesehen. Sie erstreckt sich über die gesamte Höhe des Zylinders.

Die Tiefenmesskalibrierfläche 104 ist wiederum in eine der Stirnseiten 105 des Zylinders eingelassen. Bei der Ausführung der Fig. 5 ist im massiven Bereich 121 ein entsprechender Einschnitt vorgenommen worden. Grundsätzlich kann die Tiefenmesskalibrierfläche 104 auch die Form einer Ausnehmung aufweisen, wie sie beilspielsweise in Fig. 5B durch die gestrichelten Tiefenmesskalibrierflächen 104' und 104" angedeutet ist. Die Örtlichkeit der Tiefenmesskalibrierflächen 104, 104' und 104" auf die Stirnseite 105 der Kalibrierlehre 100 ist dabei von untergeordneter Bedeutung. Sie können sowohl zentral als auch außermittig angeordnet sein. Auf der Kalibrierlehre 100 sind wiederum Beschriftungen vorgesehen, die jedoch nicht dargestellt sind.

Fig. 6 zeigt schließlich noch ein weiteres Ausführungsbeispiel einer erfindungsgemäßen Kalibrierlehre 200. Die Fig. 6A zeigt dabei einen Schnitt entlang der Linie C-C in den Fig. 6B bzw. 6C. Bei der Kalibrierlehre 200 handelt es sich um eine hohlzylindrische Kalibrierlehre. Die Außenmesskalibrierfläche 203 ist wiederum auf der Mantelfläche 206 vorgesehen, wobei sich die Außenmesskalibrierfläche, anders als im Ausführungsbeispiel der Fig. 5, nicht über die gesamte Höhe und damit über die gesamte Mantelfläche des Zylinders erstreckt, sondern auf einen gewissen Bereich beschränkt ist. Dieser Bereich kann optisch hervorgehoben sein, beispielsweise durch zwei umlaufende Nuten 230.

Die Innenmesskalibrierfläche 202 ist in der Ausführung der Fig. 6 vertieft in die Wandung 211 eingearbeitet. Dies bedeutet, dass der Innendurchmesser i der Innenmesskalibrierfläche 202 größer ist als der Innendurchmesser l des Zylinders, der durch die Innenfläche 210 begrenzt wird. Dies bringt den Vorteil mit sich, dass bei der Herstellung der Kalibrierlehre 200 lediglich ein Bereich der Innenfläche entsprechend exakt gearbeitet und bearbeitet sein muss, um die erforderliche Messgenauigkeit bereitzustellen. Im Ausführungsbeispiel der Fig. 6 ist eine Tiefenmesskalibrierfläche 204 vorgesehen, die entsprechend der Ausführung in den Fig. 1 und 4 in der Wandung 211 auf einer der Stirnseiten 205 in der Form eines entsprechenden Einschnittes ausgebildet ist.

### Bezugszeichenliste

- 1, 100, 200: Kalibrierlehre
- 2, 102, 202: Kalibrierfläche zur Kalibrierung einer Messfläche für die Innenmessung
- 3, 103, 203: Kalibrierfläche zur Kalibrierung einer Messfläche für die Außenmessung
- 4, 104, 204: Kalibrierfläche zur Kalibrierung einer Messfläche für die Tiefenmessung
- 5, 105, 205: Stirnseite
- 6, 106, 206: Mantelfläche
- 7: Beschriftung
- 8: Begrenzungsring
- 9: Begrenzungsring
- 10,210: Innenfläche
- 11, 211: Wandung
- 12: Aufsetzfläche
- 13: Aufsetzfläche
- 121: massiver Bereich
- 122: hohler Bereich
- 230: Nute

## Patentansprüche

1. Kalibrierlehre zur Kalibrierung eines Messschiebers, auf der zumindest eine Kalibrierfläche zur Kalibrierung einer Messfläche für die Innenmessung (2, 102, 202) und zumindest eine Kalibrierfläche zur Kalibrierung einer Messfläche für die Außenmessung (3, 103, 203) vorgesehen sind, wobei die Kalibrierlehre (1, 100, 200) die Form eines zumindest teilweise hohlen Zylinders hat, auf dessen Mantelfläche (6, 106, 206) die Kalibrierfläche zur Kalibrierung der Messfläche für die Außenmessung und auf dessen Innenfläche (10, 210) die Kalibrierfläche zur Kalibrierung der Messfläche für die Innenmessung vorgesehen sind,
**dadurch gekennzeichnet, dass**
zumindest eine Kalibrierfläche zur Kalibrierung einer Messfläche für die Tiefenmessung (4, 104, 204) auf zumindest einer der Stirnseiten (5, 105, 205) des Zylinders vorgesehen ist.

2. Kalibrierlehre nach Anspruch 1, **dadurch gekennzeichnet, dass** die Kalibrierfläche zur Kalibrierung der Messfläche für die Außenmessung (3, 103, 203) in die Mantelfläche (6, 106, 206) des Zylinders vertieft eingearbeitet ist, so dass der Durchmesser (a) dieser Kalibrierfläche kleiner ist als der Außendurchmesser (A) des Zylinders.

3. Kalibrierlehre nach Anspruch 2, **dadurch gekennzeichnet, dass** die Höhe (h) der Kalibrierfläche zur Kalibrierung der Messfläche für die Außenmessung (3, 103, 203) so angepasst ist, dass die Kalibrierlehre zur Kalibrierung eines Mikrometers verwendbar ist, insbesondere dass die Höhe dieser Kalibrierfläche zumindest 9 mm beträgt.

4. Kalibrierlehre nach einem der vorhergehenden Ansprüche, **dadurch gekennzeichnet, dass** die Kalibrierfläche zur Kalibrierung der Messfläche für die Tiefenmessung (4, 104, 204) zumindest ein Einschnitt auf der Stirnseite (5, 105, 205) des Zylinders ist, wobei die Höhe einer diesen Einschnitt benachbarten Wandung (11, 211) des Zylinders die zu kalibrierende Tiefe (t) angibt.

5. Kalibrierlehre nach einem der vorhergehenden Ansprüche, **dadurch gekennzeichnet, dass** die Kalibrierfläche zur Kalibrierung der Messfläche für die Innenmessung (2, 102, 202) in die Innenfläche (10, 210) des Zylinders vertieft eingearbeitet ist, so dass der Durchmesser (i) dieser Kalibrierfläche größer ist als der Innendurchmesser (I) des Zylinders.

6. Kalibrierlehre nach einem der vorhergehenden Ansprüche, **dadurch gekennzeichnet, dass** die Kalibrierfläche zur Kalibrierung der Messfläche für die Tiefenmessung (4, 104, 204) bei einer Kalibrierlehre (100), die nur zum Teil als Hohlzylinder ausgebildet ist, in einem massiven Bereich (121) des Zylinders vorgesehen ist.

7. Kalibrierlehre nach einem der Ansprüche 1-5, **dadurch gekennzeichnet, dass** die Kalibrierlehre (1, 200) ein Hohlzylinder ist.

8. Kalibrierlehre nach Anspruch 7, **dadurch gekennzeichnet, dass** der Innendurchmesser des Hohlzylinders über die gesamte Höhe des Zylinders gleich bleibend ist.

9. Kalibrierlehre nach einem der vorhergehenden Ansprüche, **dadurch gekennzeichnet, dass** die Kalibrierfläche zur Kalibrierung der Messfläche für die Außenmessung (3, 103, 203) von zwei parallel liegenden Begrenzungsringen (8, 9) begrenzt ist.

10. Kalibrierlehre nach Anspruch 9, **dadurch gekennzeichnet, dass** die Höhen der Begrenzungsringe (8, 9) voneinander verschieden sind.

11. Kalibrierlehre nach Anspruch 9 oder 10, **dadurch gekennzeichnet, dass** die Kalibrierfläche zur Kalibrierung der Messfläche für die Tiefenmessung (4, 104, 204) nahezu über die gesamte Höhe eines der beiden Begrenzungsringe (8, 9) ausgebildet ist.

12. Kalibrierlehre nach einem der Ansprüche 1-8, **dadurch gekennzeichnet, dass** die Kalibrierfläche zur Kalibrierung der Messfläche für die Außenmessung (203) von zwei parallelen, umlaufenden Nuten (230) begrenzt ist.

13. Kalibrierlehre nach einem der vorhergehenden Ansprüche, **dadurch gekennzeichnet, dass** zwei Kalibrierflächen zur Kalibrierung der Messfläche für die Tiefenmessung (4, 104, 204) vorgesehen sind, die insbesondere fluchtend zueinander angeordnet sind.

## Claims

1. A calibration gauge for calibrating a measurement slider, on which are provided at least one calibration surface for calibrating a measurement surface for the internal measurement (2, 102, 202) and at least one calibration surface for calibrating a measurement surface for the external measurement (3, 103, 203), wherein the calibration gauge (1, 100, 200) has the form of an at least partially hollow cylinder, on the shell surface (6, 106, 206) of which the calibration surface for calibrating the measurement surface for the external measurement is provided and on the inner surface (10, 210) of which the calibration surface for calibrating the measurement surface for the internal measurement is provided,
**characterized in that**
at least one calibration surface for calibrating a measurement surface for the depth measurement (4, 104, 204) is provided on at least one of the end faces (5, 105, 205) of the cylinder.

2. The calibration gauge according to Claim 1, **characterized in that** the calibration surface for calibrating the measurement surface for the external measurement (3, 103, 203) is worked into the shell surface (6, 106, 206) of the cylinder in a sunken manner, so that the diameter (a) of this calibration surface is smaller than the external diameter (A) of the cylinder.

3. The calibration gauge according to Claim 2, **characterized in that** the height (h) of the calibration surface for calibrating the measurement surface for the external measurement (3, 103, 203) is adapted so that the calibration gauge is able to be used for calibrating a micrometer, in particular that the height of this calibration surface is at least 9 mm.

4. The calibration gauge according to any of the preceding claims, **characterized in that** the calibration surface for calibrating the measurement surface for the depth measurement (4, 104, 204) is at least one notch on the end face (5, 105, 205) of the cylinder, wherein the height of a wall (11, 211) of the cylinder, adjacent to this notch, indicates the depth (t) which is to be calibrated.

5. The calibration gauge according to any of the preceding claims, **characterized in that** the calibration surface for calibrating the measurement surface for the internal measurement (2, 102, 202) is worked into the inner surface (10, 210) of the cylinder in a sunken manner, so that the diameter (i) of this calibration surface is greater than the internal diameter (I) of the cylinder.

6. The calibration gauge according to any of the preceding claims, **characterized in that** the calibration surface for calibrating the measurement surface for the depth measurement (4, 104, 204), with a calibration gauge (100) which is only partially formed as a hollow cylinder, is provided in a solid region (121) of the cylinder.

7. The calibration gauge according to any of Claims 1-5, **characterized in that** the calibration gauge (1, 200) is a hollow cylinder.

8. The calibration gauge according to Claim 7, **characterized in that** the internal diameter of the hollow cylinder is constant over the entire height of the cylinder.

9. The calibration gauge according to any of the preceding claims, **characterized in that** the calibration surface for calibrating the measurement surface for the external measurement (3, 103, 203) is delimited by two parallel-lying delimiting rings (8, 9).

10. The calibration gauge according to Claim 9, **characterized in that** the heights of the delimiting rings (8, 9) are different from each other.

11. The calibration gauge according to Claim 9 or 10, **characterized in that** the calibration surface for calibrating the measurement surface for the depth measurement (4, 104, 204) is formed almost over the entire height of one of the two delimiting rings (8, 9).

12. The calibration gauge according to any of Claims 1-8, **characterized in that** the calibration surface for calibrating the measurement surface for the external measurement (203) is delimited by two parallel, encircling grooves (230).

13. The calibration gauge according to any of the preceding claims, **characterized in that** two calibration surfaces for calibrating the measurement surface for the depth measurement (4, 104, 204) are provided, which are arranged in particular in alignment to each other.

## Revendications

1. Modèle d'étalonnage pour l'étalonnage d'un pied à coulisse,
sur lequel au moins une surface d'étalonnage est prévue pour l'étalonnage d'une surface de mesure correspondant à la mesure intérieure (2, 102, 202) et au moins une surface d'étalonnage est prévue pour l'étalonnage d'une surface de mesure correspondant à la mesure extérieure (3, 103, 203), le modèle d'étalonnage (1, 100, 200) prenant la forme d'un cylindre au moins en partie creux, la surface d'étalonnage prévue pour l'étalonnage de la surface de mesure correspondant à la mesure extérieure étant prévue sur la surface de chemise (6, 106, 206) et la surface d'étalonnage prévue pour l'étalonnage de la surface de mesure correspondant à la mesure intérieure étant prévue sur la surface intérieure (10, 210),
**caractérisé en ce que**
au moins une surface d'étalonnage prévue pour l'étalonnage d'une surface de mesure correspondant à la mesure de profondeur (4, 104, 204) est prévue sur au moins un des côtés avant (5, 105, 205) du cylindre.

2. Modèle d'étalonnage selon la revendication 1, **caractérisé en ce que** la surface d'étalonnage prévue pour l'étalonnage de la surface de mesure correspondant à la mesure extérieure (3, 103, 203) est en retrait dans la surface de chemise (6, 106, 206) du cylindre, de sorte que le diamètre (a) de cette surface d'étalonnage est inférieur au diamètre extérieur (A) du cylindre.

3. Modèle d'étalonnage selon la revendication 2, **caractérisé en ce que** la hauteur (h) de la surface d'étalonnage prévue pour l'étalonnage de la surface de mesure correspondant à la mesure extérieure (3, 103, 203) est adaptée de telle sorte que le modèle d'étalonnage peut être utilisé pour l'étalonnage à un micromètre, notamment **en ce que** la hauteur de cette surface d'étalonnage mesure au moins 9 mm.

4. Modèle d'étalonnage selon l'une quelconque des revendications précédentes, **caractérisé en ce que** la surface d'étalonnage prévue pour l'étalonnage de la surface de mesure correspondant à la mesure de profondeur (4, 104, 204) est au moins une entaille réalisée sur le côté avant (5, 105, 205) du cylindre, la hauteur d'une paroi (11, 211) du cylindre connexe à cette entaille indiquant la profondeur (t) à étalonner.

5. Modèle d'étalonnage selon l'une quelconque des revendications précédentes, **caractérisé en ce que** la surface d'étalonnage prévue pour l'étalonnage de la surface de mesure correspondant à la mesure intérieure (2, 102, 202) est en retrait dans la surface intérieure (10, 210) du cylindre, de sorte que le diamètre (i) de cette surface d'étalonnage est supérieur au diamètre intérieur (I) du cylindre.

6. Modèle d'étalonnage selon l'une quelconque des revendications précédentes, **caractérisé en ce que** la surface d'étalonnage prévue pour l'étalonnage de la surface de mesure correspondant à la mesure de profondeur (4, 104, 204) est prévue dans une zone massive (121) du cylindre pour les modèles d'étalonnage (100) ne prenant qu'en partie la forme d'un cylindre creux.

7. Modèle d'étalonnage selon l'une quelconque des revendications 1 à 5, **caractérisé en ce que** le modèle d'étalonnage (1, 200) est un cylindre creux.

8. Modèle d'étalonnage selon la revendication 7, **caractérisé en ce que** le diamètre intérieur du cylindre creux est constant sur l'ensemble de la hauteur du cylindre.

9. Modèle d'étalonnage selon l'une quelconque des revendications précédentes, **caractérisé en ce que** la surface d'étalonnage prévue pour l'étalonnage de la surface de mesure correspondant à la mesure extérieure (3, 103, 203) est délimitée par deux bagues de délimitation (8, 9) parallèles.

10. Modèle d'étalonnage selon la revendication 9, **caractérisé en ce que** les hauteurs des bagues de délimitation (8, 9) sont différentes l'une de l'autre.

11. Modèle d'étalonnage selon la revendication 9 ou 10, **caractérisé en ce que** la surface d'étalonnage prévue pour l'étalonnage de la surface de mesure correspondant à la mesure de profondeur (4, 104, 204) est réalisée sur la quasi totalité de la hauteur d'une des deux bagues de délimitation (8, 9).

12. Modèle d'étalonnage selon l'une quelconque des revendications 1 à 8, **caractérisé en ce que** la surface d'étalonnage prévue pour l'étalonnage de la surface de mesure correspondant à la mesure extérieure (203) est délimitée par deux rainures (230) circulaires parallèles.

13. Modèle d'étalonnage selon l'une quelconque des revendications précédentes, **caractérisé en ce que** deux surfaces d'étalonnage sont prévues pour l'étalonnage de la surface de mesure correspondant à la mesure de profondeur (4, 104, 204), lesdites surfaces étant notamment disposées de façon alignée l'une par rapport à l'autre.
